# EUROPÄISCHE PATENTSCHRIFT

(11) **EP 0 942 851 B1**
(45) Veröffentlichungstag und Bekanntmachung des Hinweises auf die Patenterteilung: **18.12.2002**
(21) Anmeldenummer: 98954345.9
(22) Anmeldetag: 05.10.1998
(51) Int. Cl.: B60R 21/20

(54) **AUFBLASBARE SCHUTZEINRICHTUNG FÜR FAHRZEUGINSASSEN ZUM SCHUTZ VOR EINEM SEITENAUFPRALL IM KOPF- UND THORAXBEREICH**
INFLATABLE PROTECTION DEVICE FOR PROTECTING HEAD AND CHEST AREAS OF PASSENGERS IN AN AUTOMOBILE DURING A SIDE COLLISION
DISPOSITIF DE PROTECTION GONFLABLE POUR OCCUPANTS D'UN VEHICULE, DESTINE A PROTEGER EN CAS DE CHOC LATERAL DANS LA ZONE DE LA TETE OU DU THORAX

(30) Priorität: 15.10.1997 DE 29718305 U
(43) Veröffentlichungstag der Anmeldung: 22.09.1999
(73) Patentinhaber: TRW Occupant Restraint Systems GmbH & Co. KG, 73551 Alfdorf (DE)
(72) Erfinder: EYRAINER, Heinz, D-73550 Waldstetten (DE); STÜTZ, Michael, D-73565 Spraitbach (DE)
(74) Vertreter: Degwert, Hartmut, Dipl.-Phys.
(86) Internationale Anmeldenummer: EP9806333
(87) Internationale Veröffentlichungsnummer: WO99019173

(56) Entgegenhaltungen:
- DE-A- 19 647 679
- GB-A- 2 278 812

## Beschreibung

Die Erfindung betrifft eine aufblasbare Schutzeinrichtung für Fahrzeuginsassen zum Schutz vor einem Seitenaufprall im Kopf- und Thoraxbereich gemäß dem Oberbegriff des Anspruchs 1.

Aus dem deutschen Gebrauchsmuster DE-U-296 05 896.3 ist eine Schutzeinrichtung bekannt, die einen Gassack aufweist, der sich im aktivierten Zustand zwischen der A-Säule und der C-Säule eines Fahrzeugs erstreckt und dessen Seitenscheiben größtenteils abdeckt.

Eine gattungsgemäße Schutzeinrichtung der eingangs genannten Art ist in der DE-A-196 47 679 gezeigt. Das Aufnahmegehäuse dieser Schutzeinrichtung weist einen Deckel auf, der infolge der Expansionskraft des Gassacks aufwärts um einen Scharnierabschnitt verschwenkt wird.

Die vorliegende Erfindung befaßt sich mit der rationellen Serienfertigung, der zweckmäßigen Unterbringung und der funktionellen Optimierung einer solchen Schutzeinrichtung im Fahrzeug. Gemäß der Erfindung weist die Schutzeinrichtung ein langgestrecktes Aufnahmegehäuse von kanalförmigem Querschnitt und wenigstens einen gefaltet in dem Aufnahmegehäuse verstaubaren aufblasbaren Gassack auf. Innerhalb des Gassacks erstreckt sich ein an eine Druckgasquelle angeschlossenes Gaseinleitungsrohr über zumindest einen wesentlichen Teil der Länge des Gassacks. Dieses Gaseinleitungsrohr ist mit einer Vielzahl von über seine Länge verteilten Gasaustrittsöffnungen versehen. Der kanalförmige Querschnitt besteht aus einem ersten, flachen Schenkel, einem zweiten, aus zwei flachen, abgewinkelten Streifen bestehenden Schenkel und einem die zwei Schenkel miteinander verbindenden Steg. Ferner weist der erste Streifen des zweiten Schenkels eine geringere Breite als der erste Schenkel auf, und der zweite Streifen ist schräg auf die freie Längskante des ersten Schenkels zu gerichtet. Der zweite Schenkel wird während des Aufblasens des Gassacks gegen den durch die Eigensteifigkeit des Aufnahmegehäuses bedingten Widerstand relativ zu dem ersten Schenkel ausgelenkt. Das langgestreckte Aufnahmegehäuse kann im Fahrzeug entlang der Dachkante unter einer Verkleidung untergebracht werden. Der gefaltete Gassack wird im Inneren des Aufnahmegehäuses in gefaltetem Zustand zusammengehalten. Der längere, flache Schenkel des Aufnahmegehäuses liegt am Fahrzeugaufbau an; der zweite Streifen des zweiten Schenkels, welcher schräg auf die freie Längskante des ersten Schenkels zu gerichtet ist, bildet eine aufspreizbare Verschlußklappe, die mit dem ersten Schenkel nicht verbunden sein muß und allein aufgrund ihrer Steifigkeit den gefalteten Gassack im Inneren des Aufnahmegehäuses hält. Zum Einbringen des gefalteten Gassacks in den Innenraum des Aufnahmegehäuses können dessen Schenkel auseinander gespreizt werden; nach dem Einbringen des Gassacks bewegen sie sich elastisch zurück und umschließen den Gassack. Beim Aufblasen des Gassacks werden die Schenkel des Aufnahmegehäuses durch den Dehnungsdruck des Gassacks auseinander gespreizt, um den Gassack austreten zu lassen. Bei diesem Vorgang drückt der als elastische Verschlußklappe dienende zweite Streifen des zweiten Schenkels den Gassack nach unten und hindert ihn daran, sich zum Fahrzeuginsassen hin in den Innenraum des Fahrzeugs auszudehnen. Durch die Ausgestaltung des Aufnahmegehäuses wird somit eine Richtwirkung erzielt, die für das Ausdehnungsverhalten des Gassacks von großer Bedeutung ist.

Das Aufnahmegehäuse wird vorzugsweise als Spritzgußteil aus einem thermoplastischen Kunststoff gefertigt. Dies ermöglicht eine rationelle Serienfertigung und gewährleistet zugleich gute mechanische Eigenschaften, insbesondere auch im Hinblick auf das Aufspreizverhalten der beiden Schenkel des Aufnahmegehäuses und die damit erzielte Richtwirkung.

In besonders vorteilhafter Weiterbildung der Erfindung ist in der Verlängerung des Aufnahmegehäuses ein flaches Profilteil vorgesehen, worin ein schlitzförmiger Aufnahmekanal für einen gefalteten Fortsatz des Gassacks und/oder ein Spannband gebildet ist. Das Profilteil kann flach ausgebildet sein, weil der segelartige (nicht aufblasbare) Fortsatz am Gassack in wenigen Lagen zusammengefaltet werden kann. Besonders vorteilhaft ist die Ausbildung des flachen Profilteils mit einem angeformten Aufnahmekanal von allgemein U-förmigem Querschnitt. In diesem Aufnahmekanal können elektrische Kabel, Seilzüge, Wasserablaufrohre und dergleichen verlegt werden.

Weitere Merkmale und Vorteile ergeben sich aus den beigefügten Unteransprüchen sowie aus der nachfolgenden Beschreibung mehrerer Ausführungsformen unter Bezugnahme auf die Zeichnungen. In den Zeichnungen zeigen:
Figur 1 eine erste Ausführungsform der Schutzeinrichtung in montagefertigem Zustand;
Figur 2 die Schutzeinrichtung nach Figur 1 in aktiviertem Zustand;
Figur 3 eine Schnittansicht entlang Linie III-III in Figur 1;
Figur 4 eine Schnittansicht entlang Linie IV-IV in Figur 1;
Figur 5 eine schematische Seitenansicht der Schutzeinrichtung in transportbereitem Zustand;

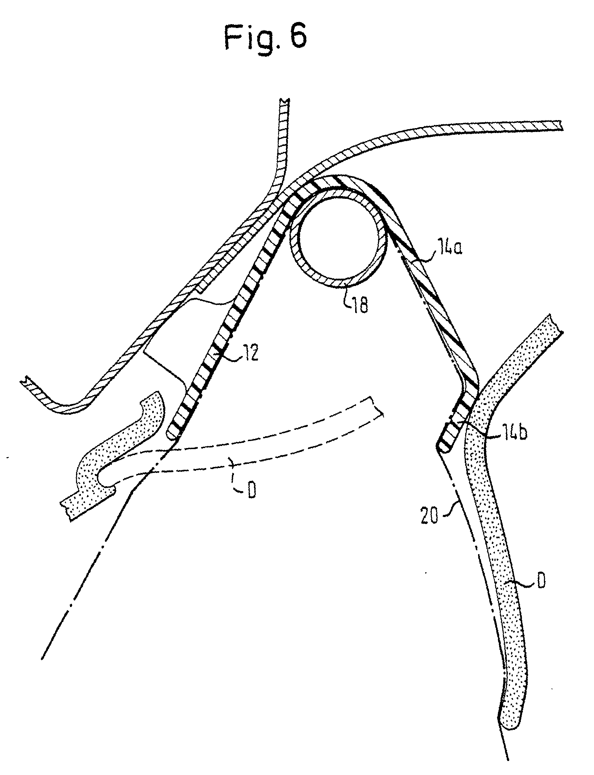

Figur 6 eine vergrößerte schematische Querschnittsdarstellung, welche die Schutzeinrichtung in aktiviertem Zustand in Anbindung an das Fahrzeug veranschaulicht;
Figur 7a bis c drei Ausführungsvarianten des Gassacks der Schutzeinrichtung;
Figur 8 eine zweite Ausführungsform der Schutzeinrichtung; und
Figuren 9a und 9b zwei Ausführungsvarianten eines Gassacks bei der Ausführungsform nach Figur 8.

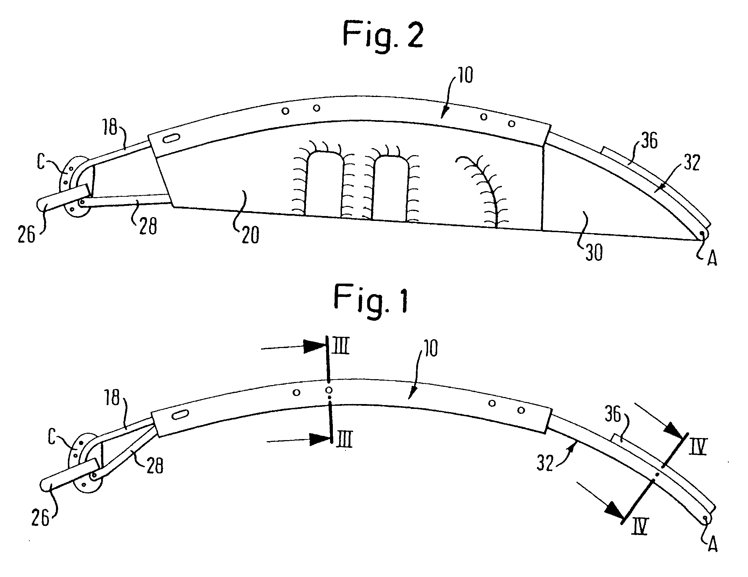

Die in Figur 1 als montagefertiges Modul gezeigte Schutzeinrichtung für Fahrzeuginsassen hat eine langgestreckte, gekrümmte Form, entsprechend dem Verlauf der Dachkante in einem Fahrzeug. Die Schutzeinrichtung erstreckt sich im Fahrzeug zwischen der A- und der C-Säule. Es ist allerdings nicht erforderlich, die gesamte Fläche der Seitenscheiben zwischen der A- und der C-Säule mit einem aufblasbaren Gassack abzudecken.

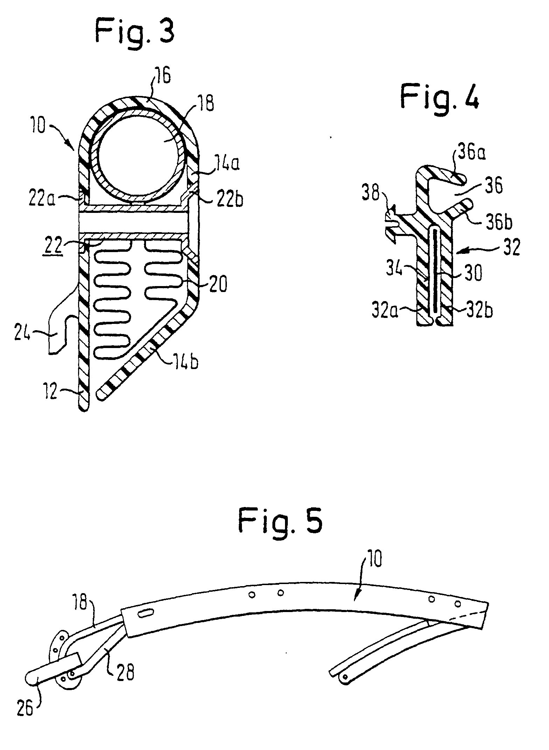

Wesentlicher Bestandteil der Schutzeinrichtung ist ein langgestrecktes Aufnahmegehäuse 10, das einen kanalförmigen Querschnitt aufweist. Einzelheiten der Querschnittsform des Aufnahmegehäuses 10 sind aus Figur 3 ersichtlich. Dieses Aufnahmegehäuse besteht aus einem ersten, flachen Schenkel 12, einem zweiten, gegenüberliegenden Schenkel, der aus einem ersten flachen Streifen 14a und einem zweiten, daran anschließenden und abgewinkelten Streifen 14b besteht, und einem die beiden Schenkel verbindenden Steg 16. Der Steg 16 ist gekrümmt und an die Außenkontur eines Gaseinleitungsrohres 18 angepaßt, das an der Innenfläche des Steges 16 anliegt und über nahezu die gesamte Länge des Aufnahmegehäuses 10 verläuft. Der Streifen 14a ist parallel zu dem Schenkel 12, während der Streifen 14b schräg auf die freie Kante des Schenkels 12 zu verläuft. Das Aufnahmegehäuse 10 wird vorzugsweise durch Spritzgießen aus einem thermoplastischen Kunststoff gefertigt. Dies gewährleistet bei leichter und rationeller Serienfertigung optimale mechanische Eigenschaften, insbesondere ein über einen weiten Temperaturbereich reproduzierbares Verhalten hinsichtlich Steifigkeit und elastischer Verformung.

Im Inneren des Aufnahmegehäuses 10 ist ein Gassack 20 in gefaltetem Zustand verstaut. In diesem Zustand wird der Gassack 20 durch den Streifen 14b des zweiten Gehäuseschenkels gehalten. Dieser bildet eine auslenkbare Verschlußklappe, deren Steifigkeit aber auch ohne unmittelbare Verbindung mit dem gegenüberliegenden Schenkel 12 gewährleistet, daß der gefaltete Gassack 20 umschlossen bleibt.

Für die Montage des Aufnahmegehäuses im Fahrzeug wird in vorteilhafter Weise von den ohnehin benötigten und vorhandenen Befestigungsmitteln für zwei Handgriffe Gebrauch gemacht. Die Handgriffe werden üblicherweise durch Schraubbolzen an der Dachkante des Fahrzeugs befestigt. Um den Durchgang der Befestigungsbolzen quer durch das Aufnahmegehäuse 10 zu ermöglichen, sind für jeden Handgriff zwei Durchführungshülsen 22 vorgesehen, die das Aufnahmegehäuse 10 senkrecht zu dem Schenkel 12 und dem Streifen 14a des zweiten Gehäuseschenkels durchqueren. Auf der Seite des Schenkels 12 ist diese Durchführungshülse 22 mit einem Flansch 22a versehen, der in den Schenkel 12 eingelassen ist. Auf der gegenüberliegenden Seite ist die Durchführungshülse 22 mit einer Aufweitung 22b versehen, die in den Streifen 14a des zweiten Gehäuseschenkels eingesenkt ist. Die Durchführungshülse 22 bildet einen Abstandshalter, der die Axialkräfte in dem Schraubbolzen aufnimmt, der durch diese Hülse geführt wird und sowohl der Befestigung des Aufnahmegehäuses unter der Dachkante als auch der Befestigung des Handgriffs (nicht gezeigt) dient. Eine weitere Funktion der Durchführungshülsen 22 besteht darin, das Gaseinleitungsrohr 18 in Anlage an der Innenfläche des gebogenen Steges 16 zu halten.

Zur Erleichterung der Montage sind auf der Seite des Schenkels 12, die gegen die Dachkanle angelegt wird, hakenförmige Einhängelemente 24 angeformt. Diese hintergreifen entsprechende Kanten der Dachkonstruktion und bringen so das langgestreckte Aufnahmegehäuse in eine geeignete Position, so daß anschließend nur noch die Befestigungsbolzen für die Handgriffe durch die Durchführungshülsen 22 eingeschraubt werden müssen.

Wie aus Figur 2 ersichtlich ist, erstreckt sich der Gassack 20 im aktivierten, aufgeblasenen Zustand nicht über die gesamte Länge der Schutzeinrichtung, sondern über denjenigen Bereich zwischen der A- und der C-Säule im Fahrzeug, in dem eine Gefährdung der vorderen und hinteren Fahrzeuginsassen durch einen Seitenaufprall gegeben ist. Die Länge des Aufnahmegehäuses 10 ist an die Längsausdehnung des Gassacks 20 angepaßt. Das Gaseinleitungsrohr 18 erstreckt sich aus dem hinteren Ende des Aufnahmegehäuses 10 heraus bis in den Bereich der C-Säule, wo die Druckgasquelle 26 angeordnet ist.

Das hintere, der C-Säule im Fahrzeug benachbarte Ende des Gassacks 20 ist durch ein Spannband 28 an die C-Säule angeschlossen. An seinem vorderen, der A-Säule benachbarten Ende weist der Gassack 20 einen segelartigen Fortsatz 30 auf, der allgemein dreieckförmig ist, entsprechend der Dreieckform am vorderen Ende des Seitenfensters im Fahrzeug. Das vordere Ende dieses Fortsatzes 30 ist an der A-Säule verankert.

Zur Aufnahme des segelartigen Fortsatzes 30 am Gassack 20 ist in der Verlängerung des Aufnahmegehäuses 10 ein flaches Profilteil 32 vorgesehen. Die Querschnittsform dieses Profilteils 32 ist aus Figur 4 ersichtlich. Zwischen zwei flachen, parallelen Flügeln 32a, 32b ist ein schlitzförmiger Aufnahmekanal 34 gebildet, worin der segelartige Fortsatz 30 des Gassacks 20 in wenigen Lagen gefaltet aufgenommen ist. An das Profilteil 32 ist ein im Querschnitt allgemein U-förmiger Aufnahmekanal 36 angeformt. Dieser Aufnahmekanal 36 ist von zwei gegeneinander konvergierenden, aber elastisch auslenkbaren Schenkeln 36a, 36b begrenzt. In dem Aufnahmekanal 36, der sich nur über einen Teil der Länge des Profilteils 32 erstreckt, können elektrische Kabel, ein Wasserablaufkanal oder dergleichen verlegt werden. Zur Montage des Profilteils 32 am Fahrzeug sind mehrere Rastzapfen 38 angeformt. Diese werden in entsprechende Löcher entlang der Dachkante des Fahrzeugs eingedrückt.

Das Profilteil 32 ist vorzugsweise gelenkig mit dem benachbarten Ende des Aufnahmegehäuses 10 verbunden. Es kann somit gegen das Aufnahmegehäuse umgeklappt werden, wie in Figur 5 veranschaulicht ist. Durch diese Ausgestaltung werden Lagerung und Transport erheblich vereinfacht.

Bei der Aktivierung des Gassacks wird in dessen Kammern Druckgas aus der Druckgasquelle 26 über das Gaseinleitungsrohr 18 eingeblasen, das mit einer Vielzahl von Ausströmöffnungen versehen ist, die über seine Länge verteilt sind. Dabei entwickelt sich im Inneren des Aufnahmegehäuses ein Dehnungsdruck, durch den die Gehäuseschenkel auseinander gedrückt werden, wobei zugleich die Dachabdeckung D des Fahrzeugs aus ihrer, Verankerung gelöst und aufgedrückt wird. Da der flache Schenkel 12 des Aufnahmegehäuses an der Anlagefläche der Dachkante abgestützt ist, wird der gegenüberliegende Gehäuseschenkel mit den Streifen 14a und 14b durch den sich ausdehnenden Gassack ausgelenkt. Diese Auslenkung erfolgt gegen den Widerstand sowohl aufgrund der Eigensteifigkeit des Aulnahmegehäuses als auch der sich verformenden Dachabdeckung D im Fahrzeug. Durch diesen Widerstand wird ein Druck auf den sich ausdehnenden Gassack 20 nach unten ausgeübt. Daher breitet sich der Gassack in der Anfangsphase seiner Ausdehnung überwiegend nach unten aus. Im Zusammenwirken mit der Dachabdeckung D im Fahrzeug wird somit durch die Ausgestaltung des Aufnahmegehäuses 10 eine Richtwirkung erzielt, durch die der Gassack davon abgehalten wird, sich zum Fahrzeuginsassen hin auszudehnen.

Je nach den Erfordernissen des Fahrzeugs sind unterschiedliche Ausgestaltungen des Gassacks möglich, die keine Änderungen im Bereich des Aufnahmegehäuses 10 oder des Profilteils 32 erfordern.

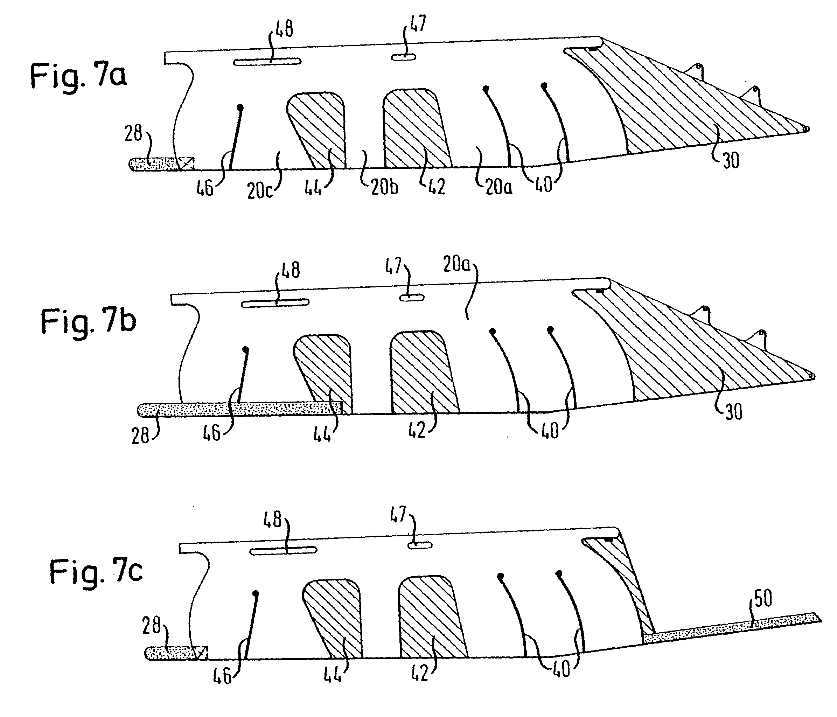

So zeigt Figur 7a einen Gassack mit dem bereits beschriebenen segelartigen Fortsatz 30, einer daran anschließenden Kammer 20a, die durch zwei Einschnürungen 40 in drei Abteile unterteilt ist, einen ausgesparten Bereich 42, der nicht aufgeblasen wird und beispielsweise aus zwei miteinander verwobenen Gewebelagen besteht, einer weiteren Kammer 20b, einem ebenfalls ausgesparten Bereich 44 und einer hinteren Kammer 20c, die durch eine Einschnürung 46 in zwei Abteile unterteilt ist. Im aufgeblasenen Zustand ist dieser Gassack über das Spannband 28, das an der C-Säule angeschlossen ist, und das vordere Ende des Fortsatzes 30, welches unten an der A-Säule verankert ist, zwischen den genannten Säulen des Fahrzeugs verspannt. Durch die seitliche Ausdehnung der Kammern 20a, 20b und 20c kommt es zu einer Verkürzung der effektiven Länge des Gassacks gegenüber seinem nicht aufgeblasenen Zustand. Diese Längenkontraktion bewirkt die Verspannung zwischen der A- und der C-Säule.

Wie aus Figur 7a ferner ersichtlich ist, sind entlang der oberen Kante des Gassacks 20 schlitzförmige Bereiche 46, 48 ausgespart. Durch diese schlitzförmigen Bereiche hindurch werden die Durchführungshülsen 22 geführt. Es ist somit möglich, die Befestigung des Aufnahmegehäuses 10 durch den Gassack hindurch vorzunehmen. Die Schlitzform läßt die zuvor beschriebene Längenkontraktion des Gassacks beim Aufblasen zu.

Die in Figur 7b gezeigte Ausführungsvariante unterscheidet sich von der nach Figur 7a nur durch das Spannband 28, welches nicht am hinteren Ende des Gassacks, sondern an dem ausgesparten Bereich 44 befestigt ist.

Bei der in Figur 7c gezeigten Ausführungsvariante ist der vordere Fortsatz 30 durch ein Spannband 50 ersetzt. Dieses Spannband 50 kann in ähnlicher Weise wie der Fortsatz 30 in dem flachen Profilteil 32 aufgenommen werden.

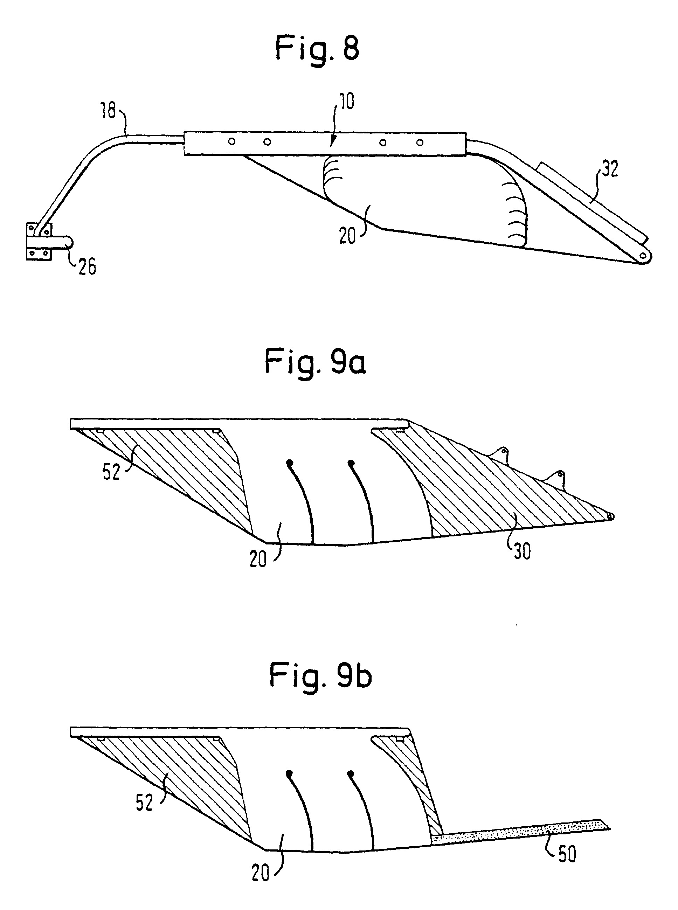

Figur 8 zeigt eine Ausführungsform, bei welcher sich der Gassack 20 im aufgeblasenen Zustand im Bereich zwischen der A- und der B-Säule des Fahrzeugs erstreckt. Das Gaseinleitungsrohr 18 ist dennoch bis zur C-Säule verlängert, an welcher die Druckgasquelle 26 angeordnet ist.

Bei der in Figur 9a gezeigten Ausführungsform des Gassacks ist wiederum ein segelartiger Fortsatz 30 vorgesehen. Bei der in Figur 9b gezeigten Ausführungsvariante ist dieser Fortsatz durch ein Spannband 50 ersetzt. Das Aufnahmegehäuse 10 ist von gleicher Querschnittsform wie bei der zuvor beschriebenen Ausführungsform, ebenso wie das flache Profilteil 32; das Aufnahmegehäuse 10 hat jedoch eine reduzierte Länge und keine oder eine nur geringe Krümmung. Anstelle des Spannbandes 28 ist bei beiden Ausführungsvarianten ein segelartiger Fortsatz 52 vorgesehen, der dem Fortsatz 30 analog ist und sowohl eine Schutzfunktion als auch eine Spannfunktion aufweist.

## Patentansprüche

1. Aufblasbare Schutzeinrichtung für Fahrzeuginsassen zum Schutz vor einem Seitenaufprall im Kopf- und Thoraxbereich, mit
- einem langgestreckten Aufnahmegehäuse (10) von kanalförmigem Querschnitt,
- wenigstens einem gefaltet in dem Aufnahmegehäuse verstaubaren aufblasbaren Gassack (20) und
- einem an eine Druckgasquelle (26) angeschlossenen Gaseinleitungsrohr (18), das sich innerhalb des Gassacks (20) über zumindest einen wesentlichen Teil seiner Länge erstreckt und mit über seine Länge verteilten Gasaustrittsöffnungen versehen ist;
wobei der kanalförmige Querschnitt aus einem ersten, flachen Schenkel (12), einem zweiten, aus zwei flachen, abgewinkelten Streifen (14a, 14b) bestehenden Schenkel und einem die zwei Schenkel miteinander verbindenden Steg (16) besteht, wobei ferner der erste Streifen (14a) des zweiten Schenkels eine geringere Breite als der erste Schenkel (12) aufweist und der zweite Streifen (14b) schräg auf die freie Längskante des ersten Schenkels (12) zu gerichtet ist,
**dadurch gekennzeichnet, daß** der zweite Schenkel während des Aufblasens des Gassacks (20) gegen den durch die Eigensteifigkeit des Aufnahmegehäuses (10) bedingten Widerstand relativ zu dem ersten Schenkel (12) ausgelenkt wird.

2. Schutzeinrichtung nach Anspruch 1, **dadurch gekennzeichnet, daß** der die Schenkel verbindende Steg (16) an die Außenkontur des Gaseinleitungsrohres (18) angepaßt ist.

3. Schutzeinrichtung nach Anspruch 1 oder 2, **dadurch gekennzeichnet, daß** das Aufnahmegehäuse (10) von wenigstens einer Durchführungshülse (22) für ein Befestigungselement zur Befestigung im Fahrzeug durchsetzt ist.

4. Schutzeinrichtung nach Anspruch 3, **dadurch gekennzeichnet, daß** die Befestigungshülse (22) einen vom Innenraum des Gassacks (20) abgedichtet abgegrenzten Bereich desselben durchquert.

5. Schutzeinrichtung nach Anspruch 4, **dadurch gekennzeichnet, daß** der abgegrenzte Bereich des Gassacks durch einen sich in dessen Längsrichtung erstreckenden Schlitz (47, 48) gebildet ist.

6. Schutzeinrichtung nach einem der Ansprüche 3 bis 5, **dadurch gekennzeichnet, daß** zwei Hülsenpaare (22) vorgesehen sind, die jeweils den Durchgang von zwei Handgriff-Befestigungsbolzen gestatten.

7. Schutzeinrichtung nach einem der Ansprüche 3 bis 6, **dadurch gekennzeichnet, daß** das Gaseinleitungsrohr (18) zwischen dem die Schenkel verbindenden Steg (16) und der Durchführungshülse (22) gehalten ist.

8. Schutzeinrichtung nach einem der Ansprüche 3 bis 7, **dadurch gekennzeichnet, daß** die Durchführungshülse (22) mit einer in den ersten Streifen (14a) des zweiten Schenkels eingesenkten Erweiterung (22b) versehen ist.

9. Schutzeinrichtung nach einem der Ansprüche 3 bis 8, **dadurch gekennzeichnet, daß** die Durchführungshülse (22) mit einer in den ersten Schenkel (12) eingelassenen Flansch (22a) versehen ist.

10. Schutzeinrichtung nach einem der Ansprüche 1 bis 9, **dadurch gekennzeichnet, daß** der Gassack (20) mit einem segelartigen Fortsatz (30) versehen ist, der beim Aufblasen des Gassacks (20) aufgespannt wird.

11. Schutzeinrichtung nach Anspruch 10, **dadurch gekennzeichnet, daß** in der Verlängerung des Aufnahmegehäuses (10) ein flaches Profilteil (32) vorgesehen ist, worin ein schlitzförmiger Aufnahmekanal (34) für den gefalteten Fortsatz (30) des Gassacks (10) und/oder ein Spannband (28; 50) gebildet ist.

12. Schutzeinrichtung nach Anspruch 11, **dadurch gekennzeichnet, daß** an das flache Profilteil (32) ein im Querschnitt allgemein U-förmiger Aufnahmekanal (36) angeformt ist.

13. Schutzeinrichtung nach Anspruch 12, **dadurch gekennzeichnet, daß** der Aufnahmekanal (36) von zwei elastisch auslenkbaren Schenkeln (36a, 36b) begrenzt ist.

14. Schutzeinrichtung nach einem der Ansprüche 11 bis 13, **dadurch gekennzeichnet, daß** wenigstens ein Rastzapfen (38) an dem Profilteil (32) angeformt ist.

15. Schutzeinrichtung nach einem der Ansprüche 11 bis 14, **dadurch gekennzeichnet, daß** das Profilteil (32) beweglich mit dem benachbarten Ende des Aufnahmegehäuses verbunden ist.

16. Schutzeinrichtung nach einem der vorstehenden Ansprüche, **dadurch gekennzeichnet, daß** der Gassack (20) im aufgeblasenen Zustand einen Seitenfensterbereich zwischen der A-Säule und der C-Säule des Fahrzeugs abdeckt.

17. Schutzeinrichtung nach Anspruch 16, **dadurch gekennzeichnet, daß** der Gassack (20) einen an der A-Säule verankerten segelartigen Fortsatz (30), einen ersten, daran angrenzenden Kammerbereich (20a), der sich bis in den Bereich der B-Säule erstreckt, einen zur C-Säule hin beabstandeten zweiten Kammerbereich (20b) und einen dritten Kammerbereich (20c) aufweist, der von dem zweiten Kammerbereich zur C-Säule hin beabstandet und mit dieser durch ein Spannband (28) verbunden ist.

18. Schutzeinrichtung nach einem der Ansprüche 1 bis 17, **dadurch gekennzeichnet, daß** das Gaseinleitungsrohr (18) aus dem Aufnahmegehäuse (10) herausragt und bis zu der in der C-Säule angeordneten Gasquelle (26) verlängert ist.

19. Schutzeinrichtung nach einem der Ansprüche 1 bis 17, **dadurch gekennzeichnet, daß** der Gassack (20) im aufgeblasenen Zustand einen Bereich zwischen der A-Säule und der B-Säule des Fahrzeugs abdeckt und daß das Gaseinleitungsrohr (18) aus dem Aufnahmegehäuse (10) herausragt und bis zu der in der C-Säule angeordneten Gasquelle (26) verlängert ist.

20. Schutzeinrichtung nach einem der vorstehenden Ansprüche, **dadurch gekennzeichnet, daß** das Aufnahmegehäuse (10) aus Kunststoff durch Spritzgießen hergestellt ist.

21. Schutzeinrichtung nach Anspruch 20, **dadurch gekennzeichnet, daß** die Schenkel des Aufnahmegehäuses (10) elastisch aufspreizbar sind.

22. Schutzeinrichtung nach einem der vorstehenden Ansprüche, **dadurch gekennzeichnet, daß** an dem ersten Schenkel (12) des Aufnahmegehäuses (10) hakenförmige Einhängelemente (24) angeformt sind.

## Claims

1. An inflatable vehicle occupant protective means for head and thorax side impact protection, comprising
- an elongated receiving housing (10) of channel-shaped cross-section,
- at least one inflatable gas bag (20) stowable folded in said receiving housing, and
- extending within said gas bag (20) over at least a substantial part of its length, a gas inlet tube (18) connected to a compressed gas source (26) and provided with gas exit ports distributed over its length;
said channel-shaped cross-section consisting of a first flat leg (12), a second leg consisting of two flat, angled strips (14a, 14b), and a web (16) joining said two legs to each other, said first strip (14a) of said second leg further having a lesser width than said first leg (12), and said second strip (14b) being oriented obliquely towards the free longitudinal edge of said first leg (12),
**characterized in that** during inflation of said gas bag (20), said second leg is deflected in relation to said first leg (12) against the resistance caused by the inherent stiffness of said receiving housing (10).

2. The protective means as set forth in claim 1, **characterized in that** said web (16) joining said legs is adapted to the outer contour of said gas inlet tube (18).

3. The protective means as set forth in claim 1 or 2, **characterized in that** said receiving housing (10), for its attachment in the vehicle, is traversed by at least one lead-through sleeve (22) for a fastener.

4. The protective means as set forth in claim 3, **characterized in that** said lead-through sleeve (22) passes through a defined portion of said gas bag (20), sealed from the interior of the latter.

5. The protective means as set forth in claim 4, **characterized in that** said defined portion of said gas bag is formed by a slot (47, 48) extending in the longitudinal direction of said gas bag.

6. The protective means as set forth in any of claims 3 to 5, **characterized in that** two pairs of sleeves (22) are provided, each of which permits passage of two grab handle fastener studs.

7. The protective means as set forth in any of claims 3 to 6, **characterized in that** said gas inlet tube (18) is held between said web (16) joining said legs and said lead-through sleeve (22).

8. The protective means as set forth in any of claims 3 to 7, **characterized in that** said lead-through sleeve (22) is provided with a widened portion (22b) let in flush in said first strip (14a) of said second leg.

9. The protective means as set forth in any of claims 3 to 8, **characterized in that** said lead-through sleeve (22) is provided with a flange (22a) recessed in said first leg (12).

10. The protective means as set forth in any of claims 1 to 9, **characterized in that** said gas bag (20) is provided with a sail-type extension (30) which is tensed on inflation of said gas bag (20).

11. The protective means as set forth in claim 10, **characterized in that** a flat profile part (32) is provided in the elongation of said receiving housing (10), said flat profile part (32) having formed therein a slot-shaped receiving conduit (34) for the folded extension (30) of said gas bag (10) and/or a tensioning strap (28; 50).

12. The protective means as set forth in claim 11, **characterized in that** a receiving conduit (36) generally U-shaped in cross-section is integrally formed with said flat profile part (32).

13. The protective means as set forth in claim 12, **characterized in that** said receiving conduit (36) is defined by two elastically deflectable legs (36a, 36b).

14. The protective means as set forth in any of claims 11 to 13, **characterized in that** at least one latching pin (38) is integrally formed with said profile part (32).

15. The protective means as set forth in any of claims 11 to 14, **characterized in that** said profile part (32) is movably connected to the adjacent end of said receiving housing.

16. The protective means as set forth in any of the preceding claims, **characterized in that** said gas bag (20) in the inflated condition covers a side pane portion between the A pillar and the C pillar of said vehicle.

17. The protective means as set forth in claim 16, **characterized in that** said gas bag (20) comprises a sail-type extension (30) anchored to said A pillar, a first chamber portion (20a) adjoining said extension (30) and extending up to the region of the B pillar, a second chamber portion (20b) spaced away from said C pillar, and a third chamber portion (20c) spaced away from said second chamber portion towards said C pillar and connected to said C pillar by a tensioning strap (28).

18. The protective means as set forth in any of claims 1 to 17, **characterized in that** said gas inlet tube (18) protrudes from said receiving housing (10) and is elongated up to said gas source (26) arranged in said C pillar.

19. The protective means as set forth in any of claims 1 to 17, **characterized in that** said gas bag (20) in the inflated condition covers a portion between said A pillar and said B pillar of said vehicle, and that said gas inlet tube (18) protrudes from said receiving housing (10) and is elongated up to said gas source (26) arranged in said C pillar.

20. The protective means as set forth in any of the preceding claims, **characterized in that** said receiving housing (10) is fabricated from a synthetic material by injection moulding.

21. The protective means as set forth in claim 20, **characterized in that** said legs of said receiving housing (10) can be elastically spread apart.

22. The protective means as set forth in any of the preceding claims, **characterized in that** hook-shaped hang-in elements (24) are formed integrally with said first leg (12) of said receiving housing (10).

## Revendications

1. Système de protection gonflable pour occupants d'un véhicule, pour la protection en cas de choc latéral dans la zone de la tête et du thorax, comportant
- un boîtier de réception (10) allongé de section transversale en forme de canal,
- au moins un coussin à gaz (20) gonflable et susceptible d'être logé plié dans le boîtier de réception, et
- un tube d'introduction de gaz (18) raccordé à une source de gaz sous pression (26), qui s'étend à l'intérieur du coussin à gaz (20) sur au moins une partie essentielle de sa longueur et qui est pourvu d'orifices de sortie de gaz répartis sur sa longueur ;
la section transversale en forme de canal étant constituée par une première branche (12) plate, par une deuxième branche formée par deux bandes (14a, 14b) plates coudées et par une traverse (16) reliant les deux branches, la première bande (14a) de la deuxième branche présentant en outre une largeur plus faible que la première branche (12), et la deuxième bande (14b) étant orientée en oblique sur l'arête longitudinale libre de la première branche (12),
**caractérisé en ce que** pendant le gonflage du coussin à gaz (20), la deuxième branche est défléchie par rapport à la première branche (12) contre la résistance due à la rigidité propre du boîtier de réception (10).

2. Dispositif de protection selon la revendication 1, **caractérisé en ce que** la traverse (16) reliant les branches est adaptée au contour extérieur du tube d'introduction de gaz (18).

3. Dispositif de protection selon la revendication 1 ou 2, **caractérisé en ce que** le boîtier de réception (10) est traversé par au moins une douille de traversée (22) pour un élément de fixation destiné à la fixation dans le véhicule.

4. Dispositif de protection selon la revendication 3, **caractérisé en ce que** la douille de traversée (22) traverse une zone délimitée et étanchée vis-à-vis de l'espace intérieur du coussin à gaz (20).

5. Dispositif de protection selon la revendication 4, **caractérisé en ce que** la zone délimitée du coussin à gaz est formée par une fente (47, 48) s'étendant dans la direction longitudinale de celui-ci.

6. Dispositif de protection selon l'une des revendications 3 à 5, **caractérisé en ce qu'**il est prévu deux paires de douilles (22) qui permettent chacune le passage de deux boulons de fixation d'une poignée.

7. Dispositif de protection selon l'une des revendications 3 à 6, **caractérisé en ce que** le tube d'introduction de gaz (18) est maintenu entre la traverse (16) reliant les branches et la douille de traversée (22).

8. Dispositif de protection selon l'une des revendications 3 à 7, **caractérisé en ce que** la douille de traversée (22) est pourvue d'un élargissement (22b) noyé dans les premières bandes (14a) de la deuxième branche.

9. Dispositif de protection selon l'une des revendications 3 à 8, **caractérisé en ce que** la douille de traversée (22) est pourvue d'une bride (22a) encastrée dans la première branche (12).

10. Dispositif de protection selon l'une des revendications 1 à 9, **caractérisé en ce que** le coussin à gaz (20) est pourvu d'un prolongement (30) en forme de voile qui est tendu au gonflage du coussin à gaz (20).

11. Dispositif de protection selon la revendication 10, **caractérisé en ce que** dans le prolongement du boîtier de réception (10), il est prévu une partie profilée (32) plate dans laquelle est formé un canal de réception (34) en forme de fente pour le prolongement (30) plié du coussin à gaz (20) et/ou pour une bande de serrage (28 ; 50).

12. Dispositif de protection selon la revendication 11, **caractérisé en ce qu'**un canal de réception (36) de section transversale en général en forme de U est formé sur la partie profilée (32) plate.

13. Dispositif de protection selon la revendication 12, **caractérisé en ce qu'**un canal de réception (36) est limité par deux branches (36a, 36b) élastiquement défléchissantes.

14. Dispositif de protection selon l'une des revendications 11 à 13, **caractérisé en ce qu'**au moins un tenon d'enclenchement (38) est formé sur la partie profilée (32).

15. Dispositif de protection selon l'une des revendications 11 à 13, **caractérisé en ce que** la partie profilée (32) est reliée de manière mobile à l'extrémité voisine du boîtier de réception.

16. Dispositif de protection selon l'une des revendications précédentes, **caractérisé en ce qu'**à l'état gonflé, le coussin à gaz (20) recouvre une région de fenêtre latérale entre la colonne A et la colonne C du véhicule.

17. Dispositif de protection selon la revendication 16, **caractérisé en ce que** le coussin à gaz (20) présente un prolongement (30) en forme de voile ancré sur la colonne A, une première zone de chambre (20a) adjacente à celui-ci, qui s'étend jusque dans la région de la colonne B, une deuxième zone de chambre (20b) espacée par rapport à la colonne C et une troisième zone de chambre (20c) qui est espacée de la deuxième zone de chambre la colonne C et qui est reliée à celle-ci par une bande de serrage (28).

18. Dispositif de protection selon l'une des revendications 1 à 17, **caractérisé en ce que** le tube d'introduction de gaz (18) fait saillie hors du boîtier de réception (10) et est prolongé jusqu'à la source de gaz (26) agencée dans la colonne C.

19. Dispositif de protection selon l'une des revendications 1 à 17, **caractérisé en ce qu'**à l'état gonflé, le coussin à gaz (20) recouvre une région entre la colonne A et la colonne B du véhicule et **en ce que** le tube d'introduction de gaz (18) fait saillie hors du boîtier de réception (10) et est prolongé jusqu'à la source de gaz (26) agencée dans la colonne C.

20. Dispositif de protection selon l'une des revendications précédentes, **caractérisé en ce que** le boîtier de réception (10) est réalisé en matière plastique par moulage par injection.

21. Dispositif de protection selon la revendication 20, **caractérisé en ce que** les branches du boîtier de réception (10) peuvent être écartées élastiquement.

22. Dispositif de protection selon l'une des revendications précédentes, **caractérisé en ce que** des éléments d'accrochage (24) en forme de crochets sont formés sur la première branche (12) du boîtier de réception (10).
